# EUROPÄISCHE PATENTSCHRIFT

(11) **EP 2 137 604 B1**
(45) Veröffentlichungstag und Bekanntmachung des Hinweises auf die Patenterteilung: **04.09.2013**
(21) Anmeldenummer: 08736537.5
(22) Anmeldetag: 24.04.2008
(51) Int. Cl.: G06F 3/12, H04N 1/32

(54) **VERFAHREN UND ANORDNUNG ZUM ÜBERTRAGEN VON DATEN ZWISCHEN MINDESTENS ZWEI VERARBEITUNGSEINHEITEN EINES DRUCK- ODER KOPIERSYSTEMS**
METHOD AND ARRANGEMENT FOR TRANSFERRING DATA BETWEEN AT LEAST TWO PROCESSING UNITS OF A PRINTING OR COPIER SYSTEM
PROCÉDÉ ET DISPOSITIF DE TRANSMISSION DE DONNÉES ENTRE AU MOINS DEUX UNITÉS DE TRAITEMENT D'UN SYSTÈME D'IMPRESSION OU DE COPIE

(30) Priorität: 24.04.2007 DE 102007019312
(43) Veröffentlichungstag der Anmeldung: 30.12.2009
(73) Patentinhaber: OCÉ Printing Systems GmbH, 85586 Poing (DE)
(72) Erfinder: WEBER, Johannes, 85586 Poing (DE); SPINDLER, Hubert, 85653 Dürrnhaar (DE)
(74) Vertreter: Schaumburg, Thoenes, Thurn, Landskron, Eckert
(86) Internationale Anmeldenummer: PCT/EP2008/055000
(87) Internationale Veröffentlichungsnummer: WO 2008/129078

(56) Entgegenhaltungen:
- EP-A- 1 185 044
- JP-A- 11 338 928
- JP-A- 2003 280 835
- JP-A- 2005 144 856
- US-A1- 2004 190 916

## Beschreibung

Die Erfindung betrifft ein Verfahren und eine Anordnung zum Übertragen von Daten zwischen mindestens zwei Verarbeitungseinheiten eines Druck- oder Kopiersystems, bei denen Daten mit zumindest Verarbeitungsinformationen zwischen den Verarbeitungseinheiten übertragen werden. Ferner betrifft die Erfindung ein Druck- oder Kopiersystem zum Verarbeiten von bahnförmigem Trägermaterial mit Hilfe von mindestens zwei Verarbeitungseinheiten des Druck- oder Kopiersystems und die Verwendung einer Netzwerkverbindung zum Bereitstellen einer Datenübertragungsverbindung zwischen den Leitständen von mindestens zwei Verarbeitungseinheiten eines Druck- oder Kopiersystems.

Bekannte Hochleistungsdruck- oder Hochleistungskopiersysteme mit Druckleistungen von größer 100 Blatt DIN A4 pro Minute und Druckgeschwindigkeiten von bis zu größer 2 m pro Sekunde umfassen üblicherweise Vor- und/oder Nachverarbeitungseinheiten, die oft als separate Baueinheiten ausgeführt sind und die mit mindestens einer Bilderzeugungseinheit gekoppelt sind. Die mindestens eine Bilderzeugungseinheit und die Vor- und/oder Nachverarbeitungseinheiten sind in einer die Produktionsrichtung angebenden Papierlaufrichtung nacheinander angeordnet, um das Trägermaterial seriell zu verarbeiten. Die Papierlaufrichtung ist allgemein die Transportrichtung des Trägermaterials durch das jeweilige Hochleistungsdruck- oder Hochleistungskopiersystem. Als Bilderzeugungseinheit des Hochleistungsdruck- oder Hochleistungskopiersystems wird vorzugsweise ein Hochleistungsdrucker oder Hochleistungskopierer verwendet.

Das Steuern und Koordinieren der Verarbeitungsschritte der einzelnen Verarbeitungseinheiten erfordert einen Austausch von Daten mit Verarbeitungsinformationen zwischen den Verarbeitungseinheiten des Druck- oder Kopiersystems. Insbesondere beim Verarbeiten von bahnförmigem Trägermaterial ist eine Echtzeitverarbeitung der den Papierlauf betreffenden Verarbeitungsinformationen erforderlich, um die Verarbeitungsschritte der einzelnen Verarbeitungseinheiten zu steuern und aufeinander abzustimmen. Dabei besteht der Wunsch und die Forderung, Geräte verschiedener Hersteller zu einem Druck- oder Kopiersystem kombinieren zu können, indem die einzelnen Geräte so nacheinander angeordnet werden, dass sie vorzugsweise eine komplette Druckstraße bilden. Die Druckstraße kann je nach der Art und den Anforderungen an die Herstellung eines herzustellenden Druckerzeugnisses auch mehrere Druckeinheiten sowie Zusatzgeräte wie beispielsweise Stacker, Kühlstrecken, Rückbefeuchter, Schneid-, Falt-, Binde-, Heft-, Kuvertier-, Frankier-, und/oder Verpackungseinheiten umfassen.

Um weiter steigende Anforderungen an den Verarbeitungsablauf bei der Herstellung von Druckerzeugnissen erfüllen zu können, sind im Stand der Technik Druckauftragsbegleitdaten bekannt, insbesondere sogenannte Jobticketdaten, die zusätzlich zu einem Druckdatenstrom bzw. Dokumentendatenstrom zwischen mehreren Software- und/oder Hardwaresystemen ausgetauscht werden. Es sind auch Anwendungen bekannt, bei denen Jobticketdaten mit in den Druckdatenstrom eingefügt sind. Die Jobticketdaten werden vorzugsweise in einer separaten Datei gespeichert und entsprechen vorzugsweise einem als JDF bekannten Job-Definitions-Format. Ferner ist bekannt, zusätzlich zu dem Job-Definitions-Format ein Job-Nachrichtenformat vorzusehen, das als JMF Job-Messaging-Format bezeichnet wird. Ein Industriekonsortium hat die JDF-Spezifikation zum Austausch von Datenformaten im Druckprozess vereinbart, die zum Zeitpunkt der vorliegenden Patentanmeldung in der Version 1.3 vom 30. September 2005 vorliegt und über die Internetseite http://www.cip4.org heruntergeladen werden kann. Auf den Seiten 15 bis 34 ist ein Überblick über diese Norm angegeben.

Ferner ist bekannt, zum Datenaustausch zwischen den Verarbeitungseinheiten von Hochleistungsdrucksystemen und/oder Hochleistungskopiersystemen eine dafür spezialisierte standardisierte Datenschnittstelle vorzusehen. Eine solche als UP³I (Universal Printer-, Pre- and Post-Processing Interface) bekannte Datenschnittstelle ist von einem Industriekonsortium standardisiert worden. Mit Hilfe der UP³I-Datenschnittstelle ist ein Austausch von Daten mit Verarbeitungsinformationen, insbesondere von Steuerinformationen, zwischen Druckgeräten und mit diesen Druckgeräten kombinierbaren Vor- und Nachverarbeitungseinheiten sowie mit einer in einer Verarbeitungseinheit integrierten Bedieneinheit und/oder mit einer separat angeordneten Bedieneinheit, einfach möglich. Für die UP³I-Schnittstelle sind für die Verarbeitungseinheiten und den Verarbeitungsablauf einer Druckstraße typische Verarbeitungsinformationen insbesondere als Steuerbefehle und Ereignismeldungen in den Schnittstellenkommandos der UP³I-Schnittstelle standardisiert. Einzelheiten zu dieser UP³I-Datenschnittstelle sowie zu dem in der aktuellen Version 1.20 vom 2. November 2004 vorliegenden Standard der UP³I-Schnittstelle sind auf der Internetseite http://www.UP3I.org zum Zeitpunkt der Anmeldung veröffentlicht. Auf den Seiten 12 bis 18 ist ein Überblick über diese Norm angegeben.

Wünschenswert ist, dass mit Hilfe des Datenaustausches zwischen den einzelnen Verarbeitungseinheiten eines Drucksystems eine vollständige Seitenverfolgung bei der Verarbeitung von Einzelblättern sowie eine vollständige Formularverfolgung bei der Verarbeitung von bahnförmigem Trägermaterial sichergestellt wird und dass bei einem aufgetretenen Fehler die erforderlichen Fehlerbehebungsmaßnahmen ermittelt und ausgeführt werden. Diese Fehlerbehebungsmaßnahmen bestehen insbesondere darin, zu ermitteln, ob der Druck und die Verarbeitung einzelner Seiten oder Formulare wiederholt werden muss, und wenn ja, sind die Seiten oder Formulare automatisch zu ermitteln, die wiederholt erzeugt werden müssen. Dies ist insbesondere bei der Produktion vergleichsweise komplexer und großer Druckjobs, wie etwa bei der Herstellung von Büchern, wünschenswert, damit nicht der gesamte teilfertiggestellte Druckauftrag als fehlerhaft eingestuft und die bereits erzeugten Druckseiten als Makulatur aussortiert werden müssen.

Im Stand der Technik gibt es ferner keine automatische Rückkopplung zu einem Datenaufbereitungssystem zum Aufbereiten und Koordinieren von Druckaufträgen, d. h. insbesondere zu einem Druckserver. Jedoch könnte durch diese Rückkoppelung gezielt ein wiederholter Druck und eine wiederholte Verarbeitung der defekten Seiten veranlasst werden.

Die Druckeinheit bzw. die Druckeinheiten bilden im Allgemeinen die Grenze zwischen den Vorverarbeitungseinheiten und den Nachverarbeitungseinheiten. Je nach Art und Aufbau der Druckeinheit und der durch den Druckauftrag spezifizierten Verarbeitungserfordernisse werden auch Anordnungen gewählt, bei denen mehrere Druckgeräte hintereinander angeordnet werden. Je nach Art und Aufbau des Druckgerätes, das die Bilderzeugungseinheit bildet, ist dieses in der Lage, Druckbilder mit einer oder mehreren Farben auf die Vorder- und/oder Rückseite des zu bedruckenden Trägermaterials zu drucken. Dabei können auch sogenannte Twin- oder Tripelkonfigurationen mehrerer Druckgeräte vorgesehen werden, die aus zwei bzw. drei Druckgeräten bestehen, zwischen denen auch Zwischenverarbeitungseinheiten vorgesehen werden können, insbesondere Wendeeinheiten, Zwischenspeichereinheiten (Papierpuffer), Kühl- und/oder Befeuchtungseinheiten. Vorverarbeitungseinheiten sind beispielsweise Abrolleinheiten, Einzelblattzuführeinheiten, sogenannte Feeder, Markendruckeinrichtungen zum Erzeugen von Druckmarken usw. Nachverarbeitungseinheiten sind beispielsweise Heftmaschinen, Schneidmaschinen, Falzmaschinen, Bindemaschinen, Vorrichtungen zum Einschuss von weiteren Blättern usw.

Neben der UP³I-Datenschnittstelle zum Datenaustausch zwischen den einzelnen Verarbeitungseinheiten eines Drucksystems sind proprietäre Lösungsansätze zum Austausch von Steuerinformationen bekannt. Eine Vielzahl dieser Schnittstellen sind jedoch nicht standardisiert, wodurch der Austausch von Verarbeitungsinformationen insbesondere von Steuersignalen, für miteinander zu kombinierende Verarbeitungseinheiten angepasst werden muss. Beispielsweise wurde zu Beginn der 90er Jahre von der Siemens AG eine sogenannte Typ1-Schnittstelle definiert, die bei einer Vielzahl von Hochleistungsdruckern als Schnittstelle zur Kopplung dieser Drucker mit Vor- und/oder Nachverarbeitungseinheiten genutzt worden ist. Die Typ1-Schnittstelle hat beispielsweise elf Nutzsignale, die unidirektional sind und die mehrere Verarbeitungseinheiten mit dem Drucksystem potentialgetrennt über Optokoppler verbinden. Eine ähnliche Schnittstelle ist durch die Firma Xerox Corporation als DFA Level 1 Schnittstelle definiert worden.

Ausgehend von solchen proprietären Lösungen ist der bereits erwähnte Standard für UP³I entwickelt worden, um eine durchgängige Kommunikation innerhalb einer digitalen Druckstraße mit Geräten, d. h. Verarbeitungseinheiten, verschiedener Hersteller zu ermöglichen. Durch den Einsatz von Geräten mit jeweils einer UP³I-Datenschnittstelle und durch einen entsprechenden Datenaustausch von Daten mit Verarbeitungsinformationen kann ein hoher Automatisierungsgrad der Druckstraße erreicht werden. Insbesondere ermöglicht UP³I automatisierte Jobwechsel sowie eine zentrale Steuerung und eine zentrale Kontrolle aller Geräte der Druckstraße, wodurch ein sogenannter Single Point of Operation möglich ist.

Grundsätzlich ist vorgesehen, UP³I sowohl bei Einzelblattdrucksystemen als auch bei Drucksystemen zum Bedrucken von bahnförmigem Trägermaterial einzusetzen. Jedoch wird die UP³I-Datenschnittstelle derzeit nur für Einzelblattdrucksysteme eingesetzt, da trotz des im UP³I-Standard formulierten Wunsches nach einer Echtzeitfähigkeit der UP³I-Datenschnittstelle eine echtzeitfähige Verarbeitung von Daten mit Verarbeitungsinformationen mit Hilfe der UP³I-Schnittstelle nicht möglich ist. Bei Einzelblattdrucksystemen wird eine zeitkritische Papierlaufsteuerung derzeit dadurch vermieden, dass die Verarbeitungsinformationen bereits vor dem Eintreffen eines Einzelblatts zu der jeweiligen Verarbeitungseinheit übertragen werden, wodurch, wenn diese Verarbeitungseinheit das Eintreffen des jeweiligen Einzelblatts mit Hilfe eines Blattkantensensors detektiert, die zu diesem Einzelblatt zugeordnete Verarbeitungsinformationen zu dessen Verarbeitung genutzt werden.

Derzeit ist weltweit noch keine tatsächlich für Hochleistungsdrucksysteme in der Praxis funktionierende Druckstraße für den Endlosdruck, d. h. zum Verarbeiten von bahnförmigem Trägermaterial, bekannt, bei der UP³I bei Druckgeschwindigkeiten von 1 m pro Sekunde und schneller zur Papierlaufsteuerung genutzt wird, da das Verarbeiten des bahnförmigen Trägermaterials mit Hilfe verschiedener Verarbeitungseinheiten eine Echtzeitverarbeitung zumindest eines Teils der Papierlaufinformationen erfordert, die UP³I derzeit nicht mit der für den Praxiseinsatz erforderlichen Sicherheit bereitstellt.

Bei bekannten Hochleistungsdruck- oder Hochleistungskopiersystemen werden zur Formularverfolgung sowie zur Papierlaufsteuerung bei bahnförmigem Trägermaterial Barcodes auf das bahnförmige Trägermaterial, vorzugsweise auf jedes zu verarbeitende Formular gedruckt, die dann durch Barcodelesegeräte der einzelnen Verarbeitungseinheiten gelesen werden, um die Position des Trägermaterials zu verifizieren und einzelne Druckformularbereiche zu identifizieren. Dadurch können entsprechende Verarbeitungsinformationen auf den korrekten Bereich des bahnförmigen Trägermaterials angewendet werden.

Ferner beruht die Datenübertragung der im Standard definierten UP³I-Datenschnittstelle physikalisch auf einer Fire-Wire-Datenverbindung zwischen den einzelnen Datenverarbeitungseinheiten gemäß dem IEEE1394-Standard. Dabei werden die physikalische Übertragungsschicht, die Verbindungsschicht zur Umwandlung von Transaktionsanfragen in Pakete und zur Sicherung von Transaktionen bei Übertragungsfehlern sowie die Transaktionsschicht für einen asynchronen gesicherten Transfer von Daten zwischen den Verarbeitungseinheiten sowie eine Busmanagementschicht für Buskonfigurations- und -managementaktivitäten nach dem IEEE1394-Standard genutzt. Auf diese Datenübertragung aufbauend werden von der UP³I-Schnittstelle eine Transportschicht und zumindest eine Anwendungsschicht definiert.

In der Praxis treten jedoch Probleme bei Datenverbindungen nach IEEE1394-Standard im industriellen Drucktechnikumfeld auf. Insbesondere ist die Datenübertragung gemäß dem IEEE1394-Standard mit am Markt erhältlichen Bauteilen störanfällig gegenüber elektromagnetischen Einflüssen, wodurch in der Praxis wiederholt Probleme bei der Übertragung von Daten mit Verarbeitungsinformationen bei Drucksystemen aufgetreten sind. Ferner ist die vorhandene Hardware zum Bereitstellen von Datenübertragungsverbindungen gemäß dem IEEE1394-Standard und zum Bereitstellen der für die UP³I-Schnittstelle erforderlichen IEEE1394-Schichten nur ein relativ geringes Angebot an Soft- und Hardware vorhanden, wobei die Verbreitung von Datenschnittstellen nach dem IEEE1394-Standard bei Neugeräten außerhalb des industriellen Drucktechnikumfelds kontinuierlich abnimmt und auch das Angebot an Schnittstellenbausteinen für Datenschnittstellen nach dem IEEE1394-Standard kontinuierlich abgenommen hat und viele namhafte Hersteller diesen Standard nicht mehr weiter unterstützen. Hinzu kommt, dass es derzeit nur noch einen sogenannten Link-Layer-Baustein, der mit einem Mikrocontroller verbindbar ist und der eine Datenschnittstelle nach dem IEEE1394-Standard bereitstellt, wobei nicht abzusehen ist, über welchen Zeitraum dieser Link-Layer-Baustein noch verfügbar sein wird. Weitere verfügbare IEEE1394-Schnittstellen-Bausteine weisen ein PCI bzw. PCIe Interface auf und sind somit nur mit Datenverarbeitungseinheiten verwendbar, die über einen PCI-Bus verfügen. Somit ist zu erwarten, dass IEEE1394-Datenschnittstelle in Zukunft nur noch von größeren Datenverarbeitungsanlagen, wie Personal Computer und Blade-Servern, unterstützt wird, wodurch die Integration in einfache Vor- und/oder Nachverarbeitungsgeräte aus wirtschaftlichen Gründen nicht sinnvoll ist und dadurch eine UP³I-Datenschnittstelle für eine Vielzahl von Verarbeitungseinheiten nicht mehr bereitgestellt werden kann.

Ferner sind aus den Dokumenten US 7,040,820 B2 und US 6,786,149 B1 weitere Drucksysteme mit mehreren gekoppelten Verarbeitungseinheiten bekannt.

In dem Dokument US 7,174,474 A ist ein serial real-time control System (SERCOS) beschrieben, bei dem ein Prozessleitsystem Servoantriebe über SERCOS ansteuert. Dabei werden die Daten in Zeitschlitzen gesendet, um die Echtzeit zu gewährleisten. Ferner offenbart das Dokument timebasierte Systeme, bei denen spezifische Aktionen bezogen auf die Zeit einer Echtzeituhr getriggert werden. Dazu ist jedoch eine synchronisierte real-time clock in den einzelnen Verarbeitungseinheiten des Prozessleitsystems vorgesehen. Ferner ist aus diesem Dokument bekannt, die Systemzeit mehrerer über einen Switch oder Repeater verbundener Datenverarbeitungseinheiten über ein Protokoll zu synchronisieren, insbesondere über das IEEE 1588-Protokoll.

Aus dem Dokument US 2003/0100961 A ist eine Kombination aus dem aus dem Dokument US 7,174,474 A bekannten SERCOS-System mit einem zweiten synchronisierten Kommunikationsmaster/slave-Netzwerk (SERBAS) bekannt. Das SERBAS-Netzwerk verbindet mehrere SERCOS-Netzwerkringe miteinander, sodass eine Vielzahl von Komponenten gesteuert werden können. Darüber hinaus ist aus dem Dokument US 2003/0100961 A bekannt, dass Statusinformationen aller miteinander gekoppelter drive units des SERCOS-Netzwerks in einer Steuereinheit zusammengefasst und für ein Master-Level über Ethernet verfügbar gemacht werden.

Aufgabe der Erfindung ist es, ein Verfahren und eine Anordnung zum Übertragen von Daten zwischen mindestens zwei Verarbeitungseinheiten eines Druck- oder Kopiersystems anzugeben, durch die die Übertragung dieser Daten einfach und sicher möglich ist. Ferner sind ein Drucksystem und eine geeignete Möglichkeit zur Übertragung von Daten zwischen mehreren Verarbeitungseinheiten eines Druck- oder Kopiersystems anzugeben.

Diese Aufgabe wird jeweils durch einen der durch die unabhängigen Patentansprüche definierten Gegenstände gelöst. Vorteilhafte Weiterbildungen der Erfindung sind in den abhängigen Patentansprüchen angegeben.

Durch ein Verfahren zum Übertragen von Daten zwischen mindestens zwei Verarbeitungseinheiten eines Drucksystems wird erreicht, dass die Daten auf einfache Art und Weise über eine geschaltete Netzwerkverbindung übertragen werden können. Eine solche Datenverbindung kann insbesondere über eine switched-Ethernet-Netzwerkverbindung gemäß dem IEEE802.3-Standard oder einem verwandten Datenübertragungsstandard zum Bereitstellen einer geschalteten Netzwerkverbindung, wie beispielsweise dem IEEE802.11-Standard, erfolgen. Die Netzwerkkomponenten für solche geschalteten Netzwerke sind in einer Vielzahl von Hardwarebausteinen wie Motherboards von Personalcomputern und Bladeservern sowie in moderne Mikrocontroller bereits integriert und auch als separate Hardwarebausteine in verschiedenster Ausführungen kostengünstig verfügbar. Ferner weisen diese Hardwarebausteine aufgrund ihrer mittlerweile hohen Verbreitung keine oder nur noch wenige Fehler auf.

Besonders vorteilhaft ist es, über das geschaltete Netzwerk nur Daten zu übertragen, die keine Echtzeitverarbeitung erfordern, und eine zusätzliche separate echtzeitfähige Datenverbindung zwischen den Verarbeitungseinheiten vorzusehen, um zumindest die Daten bzw. die Verarbeitungsinformationen zu übertragen, die eine Echtzeitverarbeitung erfordern. Dadurch besteht dann die Möglichkeit, auch Papierlaufinformationen von bahnförmigem Trägermaterial zwischen den Verarbeitungseinheiten des Druck- oder Kopiersystems zu übertragen und in Echtzeit zu verarbeiten. Die echtzeitfähige Datenverbindung weist vorzugsweise ein Übertragungsprotokoll auf, das die echtzeitfähige Datenübertragung unterstützt und somit ermöglicht.

Als Echtzeitverarbeitung wird dabei die Arbeitsweise von Steuereinheiten und/oder Datenverarbeitungsanlagen angesehen, bei der die Datenverarbeitung nahezu simultan mit den entsprechenden Prozessen in der Realität, d. h. den durch die Verarbeitungseinheiten ausgeführten Verarbeitungsprozessen, abläuft. Dabei müssen die Übertragungsstrecken zur Übertragung der Daten zwischen den Verarbeitungseinheiten so ausgebildet sein, dass sie eine Datenübertragung gestatten, die einen solchen Echtzeitbetrieb ermöglicht. Die Verarbeitung der Daten kann dabei ohne merkliche Verzögerung zu einem auslösenden Ereignis, wie einem Vorschub des Trägermaterials um eine bestimmte Transportstrecke, erfolgen. Dabei muss die Datenübertragungsstrecke garantieren, dass die Übertragung der entsprechenden Daten innerhalb einer vorgegebenen Zeitspanne erfolgt bzw. zu einem vorbestimmten Zeitpunkt nach Auftreten eines auslösenden Ereignisses abgeschlossen ist. Dadurch kann sichergestellt werden, dass eine Verarbeitungseinheit, die die Daten empfängt und weiterverarbeitet, rechtzeitig bzw. exakt zum erforderlichen Zeitpunkt die erforderlichen Handlungen aktiviert bzw. durchführt.

Über- die geschaltete Netzwerkverbindung können große Datenmengen übertragen werden. Die Übertragung relativ großer Datenmengen zwischen den Verarbeitungseinheiten des Drucksystems kann insbesondere bei der Konfiguration des Druck- oder Kopiersystems zum Übertragen von Konfigurationsinformationen zwischen den einzelnen Verarbeitungseinheiten des Drucksystems erforderlich sein. Die Konfiguration des Drucksystems läuft vorzugsweise selbständig und automatisiert ab, wobei die Daten mit den Verarbeitungsinformationen und spezielle mit den Konfigurationsinformationen zwischen den Verarbeitungseinheiten und/oder zwischen mindestens einer Verarbeitungseinheit und einem separaten Bedienfeld mit Hilfe der geschalteten Netzwerkverbindung übertragen werden. Ein solches separates Bedienfeld ist in Bezug auf die Datenübertragung auch eine Verarbeitungseinheit im Sinne der Erfindung. Die übertragenen Verarbeitungsinformationen können insbesondere auch Programmdaten und Konfigurationsdaten umfassen.

Die Anordnung mit den Merkmalen des Patentanspruchs 12 kann auf die gleiche Weise weitergebildet werden wie für das Verfahren nach Patentanspruch 1 angegeben. Insbesondere kann auch die Vorrichtung mit den Merkmalen des Patentanspruchs 9 mit den zur Weiterbildung des Verfahrens nach Patentanspruch 1 in den abhängigen Patentansprüchen angegebenen Merkmalen bzw. entsprechenden Vorrichtungsmerkmalen weitergebildet werden.

Zum besseren Verständnis der vorliegenden Erfindung wird im Folgenden auf die in den Zeichnungen dargestellten bevorzugten Ausführungsbeispiele Bezug genommen, die anhand spezifischer Terminologie beschrieben sind. Es sei jedoch darauf hingewiesen, dass der Schutzumfang der Erfindung dadurch nicht eingeschränkt werden soll, da derartige Veränderungen und weitere Modifizierungen der gezeigten Vorrichtungen und/oder der beschriebenen Verfahren sowie derartige weitere Anwendungen der Erfindung, wie sie darin aufgezeigt sind, als übliches derzeitiges oder künftiges Fachwissen eines zuständigen Fachmanns angesehen werden. Die Figuren zeigen Ausführungsbeispiele der Erfindung, nämlich:
- Figur 1: die schematische Darstellung eines ersten Steuersystems zum Steuern von Verarbeitungseinheiten einer Druckstraße gemäß einer ersten Ausführungsform der Erfindung;
- Figur 2: die schematische Darstellung eines zweiten Steuersystems zum Steuern von Verarbeitungseinheiten einer Druckstraße gemäß einer zweiten Ausführungsform der Erfindung;
- Figur 3: die schematische Darstellung eines dritten Steuersystems zum Steuern von Verarbeitungseinheiten einer Druckstraße gemäß einer dritten Ausführungsform der Erfindung;
- Figur 4: die schematische Darstellung eines vierten Steuersystems zum Steuern von Verarbeitungseinheiten einer Druckstraße gemäß einer vierten Ausführungsform der Erfindung; und
- Figur 5: eine Übersicht über den Datenfluss von Druckauftrags- und Drucksteuerungsinformationen in einem Drucksystem.

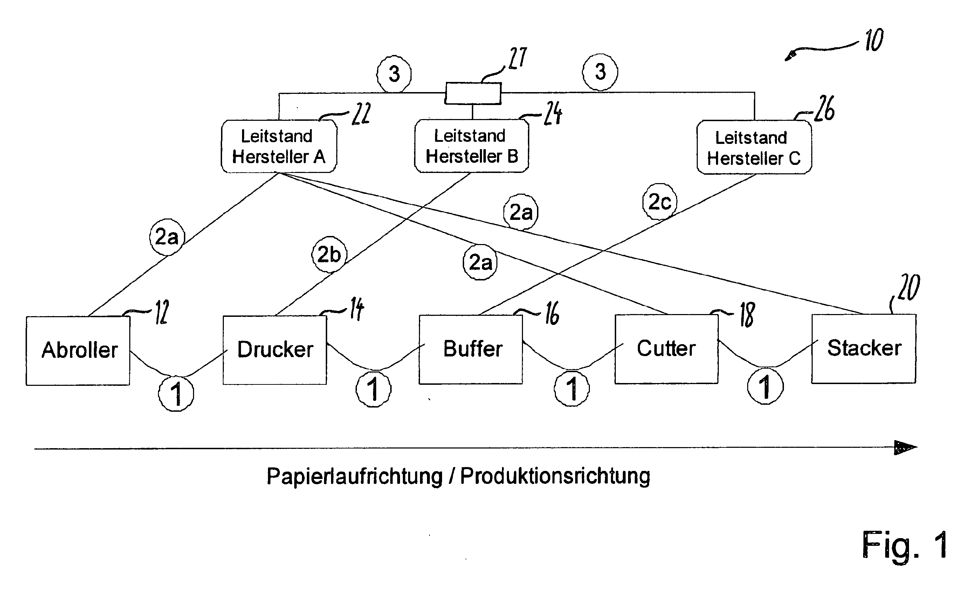

In Figur 1 ist ein Steuersystem 10 zum Steuern von Verarbeitungseinheiten einer Druckstraße dargestellt, das die Steuereinheiten 12 bis 20 der Verarbeitungseinheiten der Druckstraße umfasst, wobei die Steuereinheit 12 eine Abrolleinheit, die Steuereinheit 14 eine Druckeinheit, die Steuereinheit 16 eine Zwischenspeichereinheit, die Steuereinheit 18 eine Schneideinheit und die Steuereinheit 20 eine Stapeleinheit steuert.

Im vorliegenden Ausführungsbeispiel sind die Steuereinheiten 12, 18 und 20 jeweils den vom Hersteller A hergestellten Verarbeitungseinheiten, die Steuereinheit 14 einer vom Hersteller B hergestellten Druckeinheit und die Steuereinheit 16 einer vom Hersteller C hergestellten Zwischenspeichereinheit zugeordnet oder jeweils Bestandteil dieser Verarbeitungseinheiten. Das Steuersystem 10 weist ferner drei Leitstände 22, 24, 26 auf, wobei der Leitstand 22 vom Hersteller A, der Leitstand 24 vom Hersteller B und der Leitstand 26 vom Hersteller C jeweils als übergeordnete Kommunikationssteuerung zum Datenaustausch zwischen den Verarbeitungseinheiten der verschiedenen Hersteller A, B, C vorgesehen sind. Zwischen dem Leitstand 22 des Herstellers A und den Steuereinheiten 12, 18 und 20 ist jeweils eine proprietäre Datenverbindung 2a zur Kommunikation zwischen dem Leitstand 22 und den Steuereinheiten 12, 18, 20 vorgesehen. Zwischen dem Leitstand 24 des Herstellers B und der Steuereinheit 14 ist eine proprietäre Datenverbindung 2b zum Datenaustausch zwischen dem Leitstand 24 und der Steuereinheit 14 der Druckeinheit vorgesehen. Zwischen dem Leitstand 26 des Herstellers C und der Steuereinheit 16 des Zwischenspeichers ist eine mit dem Bezugszeichen 2c gekennzeichnete Datenverbindung zur Kommunikation zwischen dem Leitstand 26 und der Steuereinheit 16 vorgesehen.

Die Leitstände 22 bis 26 sind über ein geschaltetes Netzwerk, insbesondere einem switched Ethernet, miteinander verbunden, wobei jeder Leitstand über jeweils eine Netzwerkverbindung 3 mit einem Netzwerkswitch 27 verbunden ist. Ein solcher Netzwerkswitch 27 wird auch als Switching Hub bezeichnet und dient vorzugsweise dazu, Datenpakete von einem der Leitstände 22 bis 26 genau an einen Zielleitstand 22 bis 26 oder auch an mehrere Zielleitstände 22 bis 26 weiterzuleiten. Wird das Netzwerk zwischen den Leitständen 22 bis 26 als Ethernetnetzwerk nach einem der Standards IEEE802.3 oder IEEE802.1 aufgebaut, so wird dieses Netzwerk aufgrund des verwendeten Netzwerkswitches 27 auch als switched Ethernet bezeichnet. Vorzugsweise speichert der Netzwerkswitch 27 die für einen Zielleitstand 22 bis 26 bestimmten Daten in einem Zwischenspeicher und überträgt sie in einer weiteren unabhängigen Aktion zu dem Zielleitstand 22 bis 26. Zwischen den Leitständen 22 bis 26 wird über die Netzwerkverbindungen 3 eine Möglichkeit geschaffen, große Datenmengen zur Übertragung von Verarbeitungsinformationen zwischen den Leitständen 22, 24, 26 der unterschiedlichen Hersteller A, B, C zu übertragen.

Aufgrund der sehr preisgünstigen und hochentwickelten Netzwerkkomponenten für geschaltete Netzwerke, die zudem eine geringe EMV-Empfindlichkeit und eine hohe Ausfallsicherheit sowie eine einfache Konfiguration aufweisen, ist eine sehr einfache und zuverlässige Möglichkeit geschaffen, Verarbeitungsinformationen, die keine Echtzeitverarbeitung erfordern, über diese geschalteten Netzwerkverbindungen 3 zwischen den Leitständen 22 bis 26 und somit zwischen den Verarbeitungseinheiten zu übertragen.

Ferner ist jeweils eine Datenübertragungsverbindung 1 zwischen den Steuereinheiten 12 bis 20 vorgesehen, wobei diese Datenverbindung 1 als Daisy Chain oder als Bussystem ausgeführt sein kann. Als Bussystem können echtzeitfähige Bussysteme, insbesondere bekannte Feldbussysteme, eingesetzt werden. Im vorliegenden Ausführungsbeispiel wird das in der Automobilindustrie verbreitete CAN-Bussystem bevorzugt eingesetzt. Über diese Datenverbindung 1 werden dann Daten mit Verarbeitungsinformationen, die eine Echtzeitverarbeitung erfordern, entlang des Transportweges des zu verarbeitenden Trägermaterials (Papierlaufrichtung) zwischen den Verarbeitungseinheiten übertragen. Diese Verarbeitungsinformationen umfassen insbesondere Papierlaufinformationen, wie beispielsweise der in einzelnen Verarbeitungseinheiten 12 bis 20 erfolgte und/oder erforderliche Vorschub des Trägermaterials, Stopp-Signale, Start-Signale usw. Vorzugsweise werden formularbezogene Papierlaufinformationen erzeugt, wobei ein Formular in diesem Zusammenhang einen Druckbereich, wie beispielsweise eine Druckseite, auf einem bahnförmigen Trägermaterial bezeichnet. Die Papierlaufinformation wird dann vorzugsweise in Verbindung mit einer Formular-ID über die Datenverbindung 1 übertragen.

Die Datenverbindung 1 kann alternativ auch mit Hilfe von fest verdrahteten Steuersignalen, beispielsweise durch die Typ1-Schnittstelle, bereitgestellt werden, die eine Echtzeitverarbeitung der durch die Steuersignale bereitgestellten Verarbeitungsinformationen ermöglicht. Durch die Steuersignale werden dabei Informationen codiert, die zur Datenübertragung der Verarbeitungsinformationen dienen.

Zur Realisierung der Datenverbindung 1 zwischen den Steuereinheiten 12 bis 20 kann auch jeweils eine Ethernet-Datenverbindung, z. B. "raw"-Ethernet, genutzt werden. Für eine solche direkte Datenverbindung wird zwischen zwei Ethernet-Netzwerkadaptern beispielsweise mit Hilfe eines gekreuzten Ethernetkabels eine Datenverbindung hergestellt. Solche Ethernet-Netzwerkadapter sind jeweils in die zu verbindenden Steuereinheiten 12 bis 20 integriert oder mit der jeweiligen Steuereinheit verbunden. Die zu übertragenen Daten mit Verarbeitungsinformationen, die insbesondere eine Echtzeitverarbeitung erfordern, können so entsprechend sicher innerhalb vereinbarter Zeiträume übertragen werden. Zum Sicherstellen dieser Zeiträume können sogenannte Slots vorgesehen werden, in denen bestimmte Datenmengen (Datenpakete) übertragen werden können. Diese Slots werden für die jeweilige Datenübertragung in voreingestellten regelmäßigen Zeitabständen wiederholt bereitgestellt, so dass eine Datenübertragung bestimmter Daten, wie beispielsweise der Papierlaufinformationen, zu diesen Zeitpunkten erfolgen kann. Somit erfolgt beim Ausführungsbeispiel nach Figur 1 eine Trennung von den Daten mit Verarbeitungsinformationen, die eine Echtzeitverarbeitung erfordern, und den Daten mit Verarbeitungsinformationen, die keine Echtzeitverarbeitung erfordern, wobei die Daten, die eine Echtzeitverarbeitung erfordern, nur ein recht geringes Datenvolumen aufweisen.

Die Datenverbindung 3 des geschalteten Netzwerks kann beispielsweise durch ein Standard-Ethernet nach dem Protokoll TCP/IP oder UDP betrieben werden. Der Einsatz von Ethernet oder anderen verbreiteten geschalteten Netzwerken besteht insbesondere darin, dass Standardhard- und -software genutzt werden kann, die auf nahezu beliebigen Plattformen vorhanden ist und dadurch kostengünstig eingesetzt werden kann.

Eine Echtzeitübertragung der Daten zwischen den Verarbeitungseinheiten wäre alternativ auch mit Hilfe von sogenannten Realtime-Ethernet-Netzwerkverbindungen möglich. Im Unterschied zu dem Standard-Ethernet erfordert das Realtime-Ethernet jedoch spezielle Hard- und/oder Software. Diese sind nicht für alle Steuereinheiten und Plattformen verfügbar, wobei sowohl die Hardware als auch die Software nicht in dem Maße ausgereift ist, wie beim Standard-Ethernet. Ferner ist das Realtime-Ethernet anfälliger gegenüber Treiberfehlern aufgrund der deutlich höheren Komplexität und für eine Vielzahl von Anwendungen kann nicht auf Standard-Software zurückgegriffen werden, so dass zur Integration des Realtime-Ethernets bei einer Anwendung ein erheblicher Aufwand erforderlich ist.

Beispielsweise sind beim standardisierten Fast-Ethernet, bei dem Verbindungskabel, sogenannte Patchkabel, mit RJ45-Steckverbindern versehen sind, nur vier von acht Verbindungsleitungen zur Netzwerk-Datenübertragung erforderlich, so dass noch vier Verbindungsleitungen (Einzeldrähte) der Kabel ungenutzt sind. Diese Verbindungsleitungen können beispielsweise genutzt werden, um eine echtzeitfähige Datenverbindung, beispielsweise über den CAN-Bus, bereitzustellen. Dies hat den Vorteil, dass nicht mindestens zwei separate Kabel zum Bereitstellen des geschalteten Netzwerks und der echtzeitfähigen Datenverbindung mit jeder Verarbeitungseinheit bzw. mit jedem Leitstand 22, 24, 26 verbunden werden müssen. Zumindest dann, wenn jede Verarbeitungseinheit einen eigenen Leitstand 22 bis 26 aufweist, ist dann nur ein einziges Verbindungskabel zur Datenübertragung zwischen jeder Verarbeitungseinheit und dem Netzwerkswitch 27 ausreichend, wobei die anderen Verbindungsleitungen, die für die Echtzeitübertragung genutzt werden, nicht durch den Switch 27 selbst geschaltet werden. Jedoch ist auch der Kostenaufwand für separate Kabel zum Bereitstellen der geschalteten Netzwerkverbindung (Datenverbindung 3) und der echtzeitfähigen Datenverbindung (Datenverbindung 1) relativ gering.

Über die Netzwerkverbindung 3 können insbesondere die im UP³I-Standard festgelegten Konfiguration- und Managementinformationen sowie andere Verarbeitungsinformationen, die keine Echtzeitverarbeitung erfordern übertragen werden. Diese Daten können auch Programmdaten und/oder Konfigurationsdaten zum Bereitstellen von Bedienoberflächen zum Bedienen der einzelnen Verarbeitungseinheiten umfassen, wodurch ein sogenannter Single Point of Operation nach dem UP³I-Standard für alle Verarbeitungseinheiten 12 bis 20 der Druckstraße bereitgestellt werden kann. Ein solcher Single Point of Operation ist eine Bedieneinheit, über die alle Verarbeitungseinheiten überwacht und gesteuert werden können.

Die im UP³I-Standard festgelegten Papierlaufinformationen oder zumindest ein Teil dieser im UP³I-Standard festgelegten Papierlaufinformationen sowie für das Verarbeiten von bahnförmigem Trägermaterial zusätzlich erforderliche weitere derzeit nicht im UP³I-Standard festgelegten Papierlaufinformationen werden über die Datenverbindung 1 zwischen den Steuereinheiten 12 bis 20 nach Art einer Daisy Chain oder alternativ über ein echtzeitfähiges Bussystem übertragen. Zumindest die Datenübertragung dieser Papierlaufinformationen erfolgt somit unabhängig von den Netzwerkverbindungen 3.

Somit werden bei dem Ausführungsbeispiel nach Figur 1 die Schichten zur physikalischen Datenübertragung von UP³I-Steuerdaten nach dem IEEE1394-Standard durch entsprechende Übertragungsschichten des Ethernet-Standards ersetzt. Somit erfolgt die Übertragung der UP³I-Steuerdaten mit Hilfe einer anderen Bit-Übertragungsschicht. Sowohl die physikalische Schicht (Schicht 1) als auch die Sicherungsschicht (Schicht 2) und die Vermittlungsschicht (Schicht 3) nach dem ISO/OSI 7-Schichtenmodell des jeweiligen verwendeten Ethernet-Standards können unverändert übernommen werden, so dass zum Bereitstellen dieser Schichten auf bekannte ausgereifte Protokolle zurückgegriffen werden kann. Ferner kann die Transportschicht (Schicht 4), durch die eine Ende-zu-Ende-Verbindung und keine Punkt-zu-Punkt-Verbindung bereitgestellt wird, zumindest dann, wenn kein TCP/IP eingesetzt wird, durch ein spezifisches UP³I-Anwendungsprotokoll ersetzt werden.

Die im ISO/OSI-Schichtenmodell vorgeschlagene Sitzungsschicht (Schicht 5) wird zum Übertragen von UP³I-Steuerinformationen nicht benötigt, da der Datenverkehr zur Übertragung von UP³I-Steuerdaten paketorientiert und nicht verbindungsorientiert organisiert werden kann. Somit kann bereits oberhalb der Schicht 3 oder alternativ oberhalb der Schicht 4 oder oberhalb der Schicht 5 eine UP³I-Anwendungsschicht vorgesehen werden. Diese UP³I-Anwendungsschicht kann insbesondere weitere Unterschichten aufweisen.

Insbesondere ist es durch die Bereitstellung einer solchen Datenübertragung mit Hilfe der Netzwerkverbindungen 3 auch möglich, eine XML-Infrastruktur bereitzustellen, so dass auf semantischer Ebene definierte Strukturen ausgetauscht werden können. Insbesondere können XML-Datagramme sowie XML-Nachrichten variabler Länge vorgesehen werden. Trotz des für XML vergleichsweise hohen Protokolloverheads kann XML im Steuersystem 10 vorteilhaft eingesetzt werden, da insbesondere durch die Datenübertragung über die geschalteten Netzwerkverbindungen 3 eine ausreichende Bandbreite zur Datenübertragung zur Verfügung steht und die Verarbeitung von XML-Daten auch durch Mikrocontroller einfach implementierbar ist.

Die im bestehenden UP³I-Standard definierten Frameformate können bei dem Steuersystem 10 weitgehend beibehalten werden. Zwar ist durch dieses im UP³I-Standard festgelegte Frameformat die Flexibilität der Datenübertragung eingeschränkt und der Protokollverkehr zwischen den einzelnen Teilnehmern ist nur eingeschränkt überprüfbar, jedoch wird durch die bestehenden Frameformate eine hohe Effizienz ermöglicht, durch die insbesondere die Echtzeitübertragung der Daten über die Datenverbindungen 1 ermöglicht wird.

Die Daten mit Verarbeitungsinformationen zum Steuern des gesamten Verarbeitungsprozesses der Druckstraße bzw. eines komplexen Drucksystems können somit vorteilhaft in echtzeitrelevante Daten und in Managementdaten ohne Echtzeitrelevanz aufgeteilt werden. Diese aufgeteilten Daten können über voneinander vollständig unabhängige Protokollstacks verarbeitet werden und über separate oder gemeinsame Kabel physikalisch zwischen den Steuereinheiten 12 bis 20 bzw. 22 bis 26 übertragen werden. Bei der Übertragung von Managementdaten kommt es darauf an, mit Hilfe einer möglichst flexiblen Datenstruktur relativ große Informationsmengen zwischen den einzelnen Verarbeitungseinheiten bzw. zwischen deren Leitständen 22, 24, 26 zu übertragen. Unter Echtzeit wird vorliegend insbesondere die Anforderung verstanden, bestimmte Aktionen innerhalb eines definierten Zeitraums auszuführen.

Bei der Verarbeitung von bahnförmigem Trägermaterial ist es üblich, ein sogenanntes 1/6"-Signal als Papiervorschubsignal zu erzeugen, durch das der Vorschub des bahnförmigen Trägermaterials um 1/6" angezeigt wird. Bei Trägermaterialgeschwindigkeiten von 1 m pro Sekunde und höher können übliche Personalcomputer bei Verwendung eines in diesem Kontext üblichen Protokolls, wie beispielsweise Ethernet, eine solche Information nicht mehr mit der für eine Echtzeitverarbeitung erforderlichen Geschwindigkeit verarbeiten und übertragen. Wird parallel ein echtzeitfähiges Bussystem, wie ein CAN-Bus, zur Datenübertragung zwischen den Steuereinheiten 12 bis 20 der Verarbeitungseinheiten eingesetzt, so kann dieses 1/6"-Papiervorschubsignal in ausreichender Geschwindigkeit auch bei Druckgeschwindigkeiten bzw. Papiervorschubgeschwindigkeiten von größer 2 m pro Sekunde übertragen und verarbeitet werden.

Im vorliegenden Ausführungsbeispiel geben die Echtzeitinformationen vorzugsweise die Bewegung des Trägermaterials entlang der Transportrichtung des bahnförmigen Trägermaterials, d. h. der Produktionsrichtung der Druckstraße, von Verarbeitungseinheit zu Verarbeitungseinheit an, d. h. von der Steuereinheit 12 zur Steuereinheit 14, von der Steuereinheit 14 zur Steuereinheit 16, von der Steuereinheit 16 zur Steuereinheit 18 und von der Steuereinheit 18 zur Steuereinheit 20. Zusätzlich sind die Verarbeitungseinheiten selbst bzw. deren Leitstände 22 bis 26 über die switched-Ethernet-Netzwerkverbindung 3 verbunden bzw. miteinander vernetzt, so dass Managementfunktion, wie etwa Monitoring, Austausch von Bedienoberflächen oder die Fernbedienung aller Verarbeitungseinheiten der Druckstraße, über diese Netzwerkverbindungen 3 erfolgen können. Somit bilden die verschiedenen Ethernet-Knoten der Leitstände 22 bis 26 topologisch ein Netzwerk, durch das logisch jeder Leitstand 22 bis 26 jeden anderen Leitstand 22 bis 26 erreichen kann. Die tatsächliche Verkabelung insbesondere über den Netzwerkswitch 27 spielt dabei keine Rolle.

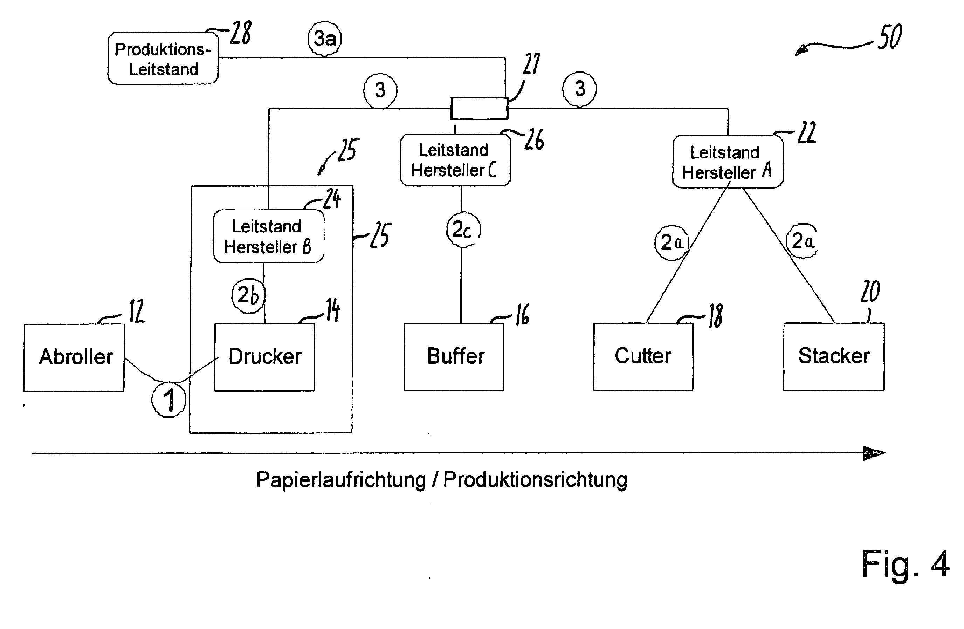

Vorzugsweise befinden sich die Ethernet-Netzwerkschnittstellen und die dafür erforderlichen Softwarekomponenten nicht innerhalb der Steuereinheiten 12 bis 20 der Gerätesteuerung der jeweiligen Verarbeitungseinheit sondern auf Leitstandebene. Jedoch kann der jeweilige Leitstand 22 bis 26 auch in einem Gerät, insbesondere in einem Mikrocontroller, zusammen mit der Steuereinheit der Gerätesteuerung einer Verarbeitungseinheit kombiniert bzw. in diesem Controller integriert sein. Diese Integration wird nachfolgend in Verbindung mit Figur 4 noch näher erläutert.

Über einen Leitstand 22, 24, 26 werden üblicherweise neben der UP³I-Kommunikation weitere Bedienfunktionalitäten bereitgestellt. Beispielsweise umfasst ein Leitstand 22, 24, 26 ein Bedienfeld mit Anzeige- und Bedienelementen. Die Mindestanforderung an die Leitstände 22 bis 26 ist die Kommunikationsfähigkeit über die Ethernet-Netzwerkverbindung 3 und die Kommunikation zu den jeweiligen mit dem Leitstand 22, 24, 26 verbundenen Steuereinheiten 12 bis 20, so dass alle für eine Verarbeitungseinheit erforderlichen Verarbeitungsinformationen nach dem UP³I-Standard, die keine Echtzeitverarbeitung erfordern, über die Netzwerkverbindungen 3 zu dem Leitstand 22, 24, 26 der Verarbeitungseinheit und weiter zur Gerätesteuereinheit 12 bis 20 der jeweiligen Verarbeitungseinheit übertragen werden.

Vorzugsweise erfolgt die Datenverbindung zur Übertragung von Daten, die eine Echtzeitverarbeitung erfordern, zwischen den Gerätesteuerungen der Verarbeitungseinheiten, d. h. zwischen den Steuereinheiten 12 bis 20. Zwischen jeweils zwei Steuerungseinheiten 12 bis 20 erfolgt eine Punkt-zu-Punkt-Verbindung. Vorzugsweise sind die zwei über eine Punkt-zu-Punkt-Verbindung verbundenen Steuereinheiten 12 bis 20 in Produktionsrichtung unmittelbar nacheinander angeordnet. Neben den Papierlaufinformationen sind auch Signale zu einem Papierstau sowie eine Papier-ID Daten, die eine Echtzeitverarbeitung erfordern.

Die Anforderungen an die einzelnen Steuereinheiten 12 bis 20 für die Datenverbindungen 1 sind relativ gering. Das CAN-Bussystem erfordert ein relativ einfaches weit verbreitetes Protokoll, so dass es einfach in bestehende Mikrocontrollersteuereinheiten und in Personalcomputer, die als Steuereinheiten dienen, implementiert werden kann. Die Punkt-zu-Punkt-Verbindung zwischen den Steuereinheiten kann dabei mit Hilfe jeweils einer separaten Busverbindung, jeweils einer separaten Netzwerkverbindung oder mit Hilfe von festverdrahteten Hardwaresignalen bereitgestellt werden. Diese Art der Datenübertragung über mehrere Punkt-zu-Punkt-Verbindungen wird auch als Daisy Chain bezeichnet, wobei jede Steuereinheit, die mit zwei weiteren Steuereinheiten verbunden ist, für jede Punkt-zu-Punkt-Verbindung eine separate Hardwareschnittstelle benötigt. Alternativ kann die Echtzeitübertragung der Daten zwischen den Steuereinheiten 12 bis 26 auch über ein gemeinsames echtzeitfähiges Bussystem erfolgen, wie beispielsweise dem CAN-Bussystem oder über durchgehende oder durchgeschliffene Steuerleitungen. Dadurch sind die Steuereinheiten 12 bis 20 dann jeweils mit dem gemeinsamen Bus verbunden.

Alternativ oder zusätzlich können echtzeitfähige Datenverbindungen zum Übertragen der Daten, die eine Echtzeitverarbeitung erfordern, zwischen den Leitständen 22 bis 26 vorgesehen werden.

Bei der Verarbeitung von Einzelblättern kann auch auf die echtzeitfähige Datenverbindung zwischen den Steuereinheiten 12 bis 20 verzichtet werden, wenn jede Verarbeitungseinheit einen Seiten- bzw. Papiersensor enthält, so dass der jeweiligen Verarbeitungseinheit bekannt ist bzw. so dass jede Verarbeitungseinheit selbst ermittelt, zu welchem Zeitpunkt ein Einzelblatt eintrifft. Die weiteren erforderlichen Verarbeitungsinformationen bzw. die nötigen Managementdaten, die etwa konkrete Angaben enthalten, welche Verarbeitungsschritte mit dem jeweiligen Einzelblatt durchgeführt werden sollen, können vorab über die Netzwerkverbindung 3 an den jeweiligen Leitstand 22 bis 26 und weiter über die Datenverbindungen 2a bis 2c zur jeweiligen Steuereinheit 12 bis 20 übertragen werden.

Durch die Trennung der Datenübertragung in eine echtzeitfähige Datenübertragung und eine nichtechtzeitfähige Datenübertragung kann auch zur Automatisierung der Druckstraße auf verbreitete kostengünstige Übertragungstechniken zur Übertragung von großen Datenmengen und zur Übertragung von echtzeitrelevanten Daten zurückgegriffen werden. Bei der Verwendung alternativer Lösungen, wie beispielsweise dem Realtime-Ethernet könnten zwar sowohl die Managementdaten als auch die echtzeitrelevanten Daten über eine Datenleitung übertragen werden, jedoch wäre dann der Hardwareaufwand und der zur Entwicklung der erforderlichen Software notwendige Entwicklungsaufwand sehr hoch. Ferner müssten auch relativ einfache Verarbeitungseinheiten mit relativ großen Datenverarbeitungsanlagen ausgestattet werden, die dann zusätzlich ein Echtzeitbetriebssystem aufweisen müssen, um eine Echtzeitverarbeitung der echtzeitrelevanten Daten sicherzustellen.

Bereits vorhandene Geräte ohne kompatible Schnittstelle zur echtzeitfähigen Übertragung können mit Hilfe einer sogenannten Konverterbox in die Echtzeitverarbeitung der Druckstraße integriert werden. Ein solcher Konverter beispielsweise zwischen dem CAN-Bussystem und der verbreiteten Typ1-Steuerschnittstelle kann sehr einfach und kostengünstig realisiert werden.

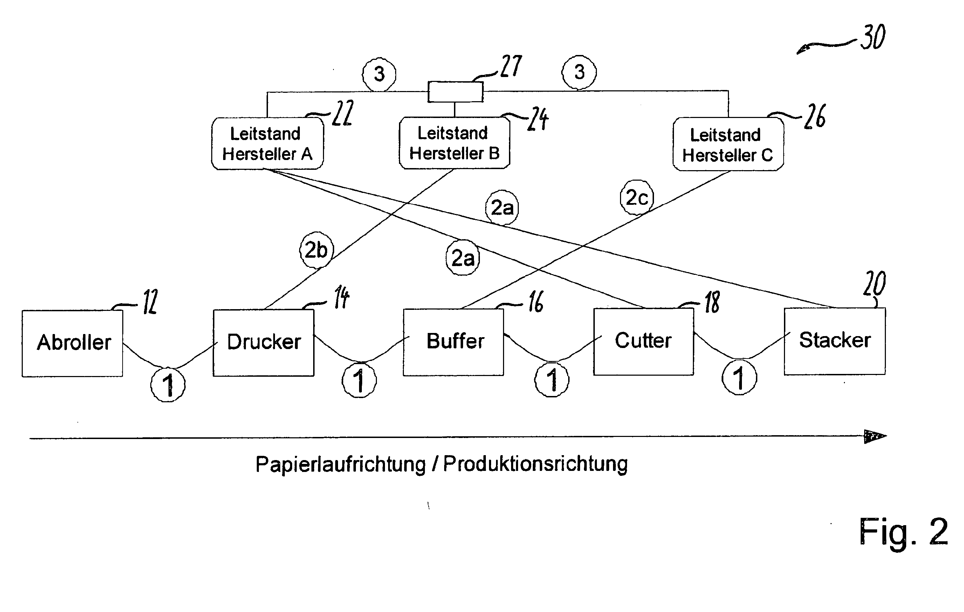

In Figur 2 ist ein Steuersystem 30 ähnlich dem Steuersystem 10 nach Figur 1 zum Steuern einer Druckstraße mit denselben Verarbeitungseinheiten und denselben Steuerreinheiten 12 bis 20 wie bei der Druckstraße nach Figur 1 gezeigt. Elemente mit gleichem Aufbau und/oder gleicher Funktion haben dieselben Bezugszeichen.

Im Unterschied zum Steuersystem 10 nach Figur 1 ist beim Steuersystem 30 nach Figur 2 keine proprietäre Datenverbindung 2a zwischen dem Leitstand 22 des Herstellers A und der Steuereinheit 12 der Abrolleinheit vorgesehen, da im vorliegenden Ausführungsbeispiel nach Figur 2 neben den über die Datenverbindung 1 übertragenen Daten mit Verarbeitungsinformationen keine weiteren Verarbeitungsinformationen mit anderen Verarbeitungseinheiten der Druckstraße übertragen werden müssen. Sollten neben den Papierlaufinformationen, mit denen die Steuereinheit 14 der Druckeinheit entsprechende Anforderungen an die Steuereinheit 12 der Abrolleinheit überträgt, weitere Verarbeitungsinformationen, insbesondere Managementinformationen, d. h. auch Verarbeitungsinformationen, die keine Echtzeitverarbeitung erfordern, übertragen werden müssen, können diese auch über die Datenverbindung 1 übertragen werden. Diese Daten können insbesondere dann übertragen werden, wenn aufgrund eines nicht aktiven Produktionsprozesses der Druckstraße keine Echtzeitdaten über die Datenverbindungen 1 zwischen den Steuereinheiten 12 bis 20 übertragen werden müssen.

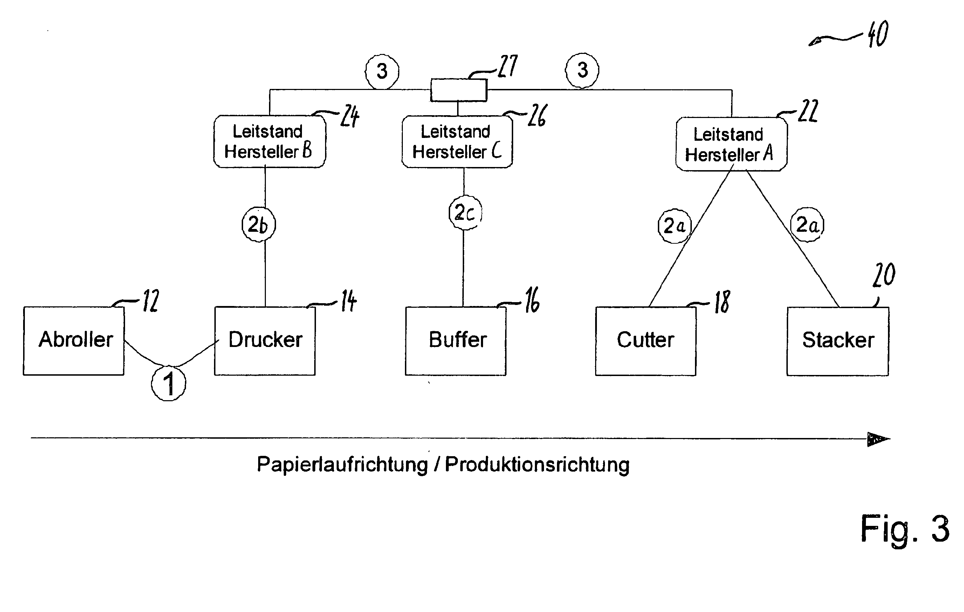

In Figur 3 ist ein Steuersystem 40 ähnlich den Steuersystemen 10 und 30 nach den Figuren 1 und 2 gezeigt. Jedoch ist das Steuersystem nur zum Steuern einer Druckstraße zur Verarbeitung von Einzelblättern vorgesehen. Zwischen den Steuereinheiten 14, 16, 18, 20 ist keine Möglichkeit zur Übertragung von Echtzeitdaten vorgesehen. Die Leitstände 22 bis 26 der Hersteller A bis C sind untereinander über ein geschaltetes Netzwerk in gleicher Weise, wie in Verbindung mit den Figuren 1 und 2 erläutert, verbunden.

In Figur 4 ist ein Steuersystem 50 ähnlich dem Steuersystem 40 nach Figur 3 dargestellt, wobei der Leitstand 24 und die Steuereinheit 14 in die Druckeinheit 25 integriert sind und vorzugsweise von einer einzigen Datenverarbeitungsanlage, wie beispielsweise einem Bladeserver, bereitgestellt werden. Zusätzlich ist ein Produktionsleitstand 28 vorgesehen, der als weiteres Bedienfeld bzw. weiterer Leitstand mit dem Netzwerkswitch 27 über die Netzwerkverbindung 3a verbunden ist.

Auch bei den Ausführungsbeispielen nach den Figuren 1 bis 3 kann ein weiterer Leitstand 28 vorgesehen werden. Ferner kann bei allen Ausführungsbeispielen jeweils ein Leitstand in jeder Verarbeitungseinheit vorgesehen sein, wobei ein solcher Leitstand nicht zwingend eine Bedieneinheit umfasst.

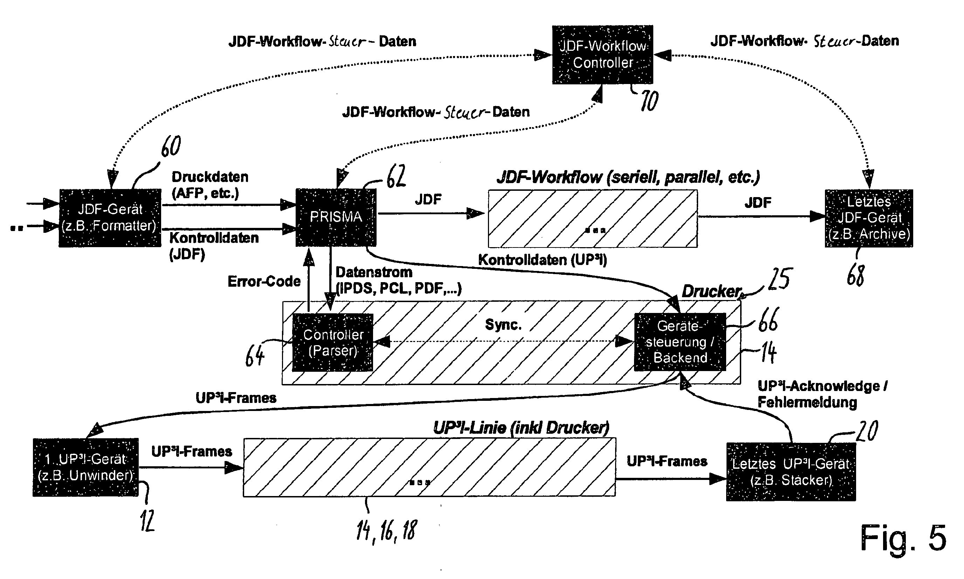

In Figur 5 ist der mit Hilfe von Jobtickets nach dem JDF bewirkte Arbeitsablauf bzw. Workflow eines Drucksystems mit mehreren Verarbeitungseinheiten beispielhaft dargestellt. Ein JDF-fähiges Gerät 60 erzeugt einen Druckdatenstrom mit Druckdaten und diesen Druckdaten zugeordnete Kontrolldaten nach dem JDF. Diese Druck- und Kontrolldaten werden einem Druckserver 62 zugeführt. Im vorliegenden Fall wird der Druckserver 62 durch ein Prisma-System der Firma OCE bereitgestellt. Der Druckserver 62 erzeugt einen Druckdatenstrom und überträgt diesen als auszuführenden Druckauftrag zum Drucker 25. Der Druckdatenstrom wird dem Controller 64 des Druckers 25 zugeführt. Im Unterschied zu bisherigen Lösungen zum Steuern des Ablaufs werden UP³I-Daten nicht mit in den zum Controller 64 des Druckers 25 zu übertragenden Druckdatenstrom integriert sondern separat zur Gerätesteuerung 66 des Druckers 25 übertragen. Eine Integration ist ferner nur bei speziellen Druckdatenströmen von UP³I-Daten in den Druckdatenstrom möglich, bei denen eine Integration weiterer Daten vorgesehen ist. Ein solcher Datenstrom ist beispielsweise der IPDS-Druckdatenstrom.

Durch die separate Übertragung der UP³I-Daten können bei dem vorliegenden Ausführungsbeispiel auch andere Druckdatenströme, wie PCL-Druckdatenströme, PDF-Druckdatenströme oder weitere beliebige Druckdatenströme vom Druckserver 62 zum Controller 64 übertragen werden. Somit werden die UP³I-Daten druckdatenstromunabhängig direkt zur Gerätesteuerung 66 des Druckers 25 übertragen. Dadurch besteht auch die Möglichkeit, die UP³I-Steuerdaten stärker an das JDF anzulehnen, so dass eine flexiblere Umsetzung der JDF-Kontrolldaten zu UP³I-Steuerdaten möglich ist. Das Prisma-Druckserver-System 62 setzt dabei die JDF-Kontrollinformationen, die sich auf große Teile oder einen ganzen Druckauftrag beziehen, auf einen seitengerechten Kontrollfluss in Form von UP³I-Daten um.

Eine Koordination bzw. Synchronisation der zur Gerätesteuerung 66 übertragenen UP³I-Daten und der zum Controller 64 übertragenen Druckdaten kann im Drucker 25 beispielsweise mit Hilfe sogenannter Seiten-IDs bzw. Form-IDs erfolgen und sichergestellt werden.

Dabei werden Echtzeitinformationen sowie Echtzeitsignale von der Gerätesteuerung 66 entsprechend dem Papierlauf zwischen den Verarbeitungseinheiten 12 bis 20 über eine oder mehrere echtzeitfähige Datenverbindungen übertragen, wie im Zusammenhang mit den Figuren 1 und 2 ausführlich beschrieben. Bei der Fertigstellung einer Verarbeitung eines Einzelblattes bzw. eines einzelnen mit einer Paper-ID gekennzeichneten Druckbereichs (Formulars) eines bahnförmigen Trägermaterials wird dieses bzw. dieser bei entsprechend korrekter Verarbeitung durch die einzelnen Verarbeitungseinheiten von der Steuereinheit 20 der letzten Verarbeitungseinheit der Druckstraße bei der Gerätesteuerung 66 abgemeldet. Alternativ wird bei einem Fehler eine Fehlerinformation von einer der Steuereinheiten 12, 16 bis 20 zur Gerätesteuerung 66 des Druckers 25 übertragen, der vorzugsweise entsprechende Fehlerdaten erzeugt und zum Druckserver 62 überträgt. Dadurch ist es möglich, ein entsprechendes Fehlerhandling durchzuführen, bei dem insbesondere die Druckseiten oder Druckbereiche ermittelt werden, die wiederholt erzeugt und verarbeitet werden müssen, um den Druckauftrag vollständig und korrekt abzuarbeiten. Weitere für den Druckprozess der Druckstraße nicht erforderliche JDF-Steuerdaten zum Steuern eines JDF-Workflows werden vom Druckserver 62 als weiterer paralleler und serieller JDF-Workflow veranlasst, wobei das in der JDF-Workflowkette letzte JDF-Gerät 68, beispielsweise ein Archivierungssystem zum Archivieren der Druckdaten, entsprechende JDF-Workflow-Steuerdaten erzeugt und diese zu einem JDF-Workflow-Controller 70 überträgt, der den gesamten Workflow, d. h. den gesamten Arbeitsablauf, steuert. Ferner bestehen Datenverbindungen zum Austausch von JDF-Workflow-Steuerdaten zwischen dem JDF-Workflow-Controller 70 und dem Druckserver 62 sowie zwischen dem JDF-Workflow-Controller 70 und dem JDF-Gerät 60.

Der Controller 64 des Druckers 25 dient u. a. dazu, die vom Druckserver 62 übertragenen PDL (Page Description Language), z. B. PCL, AFP, IPDS, Postscript, PDF, zu parsen, für ein oder mehrere Druckwerke des Druckers 25 aufzubereiten, insbesondere mit Hilfe eines Raster Image Prozesses ausgehend von den PDL-Druckdaten Rasterbilder zu erzeugen, und die aufbereiteten Druckdaten zu dem Druckwerk bzw. den Druckwerken des Druckers 25 zu übertragen. Die Gerätesteuerung 66 dient zum Steuern von Aktoren und zum Auswerten von Sensorsignalen von Sensoren des Druckers 25. Mit Hilfe der Gerätesteuerung 66 werden somit die Baugruppen und Elemente im Drucker 25 so gesteuert, dass der Druckprozess korrekt ausgeführt werden kann. Dazu kann die Gerätesteuerung 66 mit weiteren Steuereinheiten des Druckers 25 über Datenleitungen, insbesondere ein Netzwerk oder ein Bussystem, verbunden sein. Diese weiteren Steuereinheiten sind insbesondere Baugruppensteuereinheiten. Die in den Ausführungsbeispielen angeführten Leitstände sind allgemeine Kommunikationskomponenten, die für eine Verarbeitungseinheit oder für mehrere Verarbeitungseinheiten eine UP³I-Datenschnittstelle bereitstellen und dieser Verarbeitungseinheit bzw. diesen Verarbeitungseinheiten einen Austausch von Daten nach dem UP³I-Standard ermöglichen.

Die Erfindung kann vorteilhaft bei elektrografischen Druck- oder Kopiergeräten eingesetzt werden, deren Aufzeichnungsverfahren zur Bilderzeugung insbesondere auf dem elektrofotografischen, magnetografischen oder ionografischen Aufzeichnungsprinzip beruhen. Ferner können die Druck- oder Kopiergeräte ein Aufzeichnungsverfahren zur Bilderzeugung nutzen, bei dem ein Bildaufzeichnungsträger direkt oder indirekt elektrisch punktweise angesteuert wird. Die Erfindung ist jedoch nicht auf solche elektrografischen Druck- oder Kopiergeräte beschränkt.

### Bezugszeichenliste

| | |
|---|---|
| 10, 30, 40, 50 | Steuersystem |
| 12 bis 20 | Steuereinheiten |
| 22 bis 26 | Leitstände |
| 3, 3A | geschaltete Netzwerkverbindung |
| 27 | Netzwerkswitch |
| 1 | Echtzeit-Datenverbindung |
| 2A, 2B, 2C | proprietäre Datenverbindung |
| 25 | Drucker |
| 60 | JDF-Gerät |
| 62 | Druckserver/Prismasystem |
| 64 | Controller |
| 66 | Gerätesteuerung |
| 68 | JDF-Gerät |
| 70 | JDF Workflow-Controller |

## Patentansprüche

1. Verfahren zum Übertragen von Daten zwischen mindestens zwei Verarbeitungseinheiten eines Druck- oder Kopiersystems, **dadurch gekennzeichnet, dass**
die zwischen den Verarbeitungseinheiten (22 bis 26, 12 bis 20) zu übertragenden Verarbeitungsinformationen in erste Daten und in zweite Daten aufgeteilt werden, wobei die ersten Daten zumindest formularbezogene Papierlaufinformationen umfassen, für die eine Echtzeitverarbeitung erforderlich ist, und wobei die zweiten Daten Verarbeitungsinformationen umfassen, für die keine Echtzeitverarbeitung erforderlich ist,
die Verarbeitungseinheiten (12, 14, 16, 18, 20) die Verarbeitungseinheiten einer Druckstraße sind, die über eine echtzeitfähige Datenübertragungsstrecke (1) verbunden werden, wobei die ersten Daten mit formularbezogenen Papierlaufinformationen mit Hilfe der echtzeitfähigen Datenübertragungsstrecke (1) übertragen werden, und
die Verarbeitungseinheiten (22, 24, 26) Kommunikationseinheiten einer übergeordneten Kommunikationssteuerung sind, die über eine geschaltete Netzwerkverbindung (3) verbunden werden, durch die zumindest eine physikalische Schicht zum Übertragen von Daten bereitgestellt wird, wobei die zweiten Daten mit Hilfe der geschalteten Netzwerkverbindung (3) übertragen werden.

2. Verfahren nach Anspruch 1, wobei mindestens eine Netzwerkschnittstelle jeder Verarbeitungseinheit (22 bis 26) jeweils mit einem Netzwerkswitch (27) verbunden wird, durch den die zu übertragenden Daten zwischengespeichert und zumindest an die jeweils andere Verarbeitungseinheit (22 bis 26) weitergeleitet werden, wobei die Netzwerkschnittstelle vorzugsweise durch eine mit einer Steuereinheit der Verarbeitungseinheiten (12 bis 20) der jeweiligen Verarbeitungseinheit verbundenen Kommunikationseinheit (22 bis 26), insbesondere durch einen mit einer Steuereinheit einer Verarbeitungseinheit (12 bis 20) der jeweiligen Verarbeitungseinheit verbundenen Leitstand (22 bis 26), gebildet wird.

3. Verfahren nach einem der vorhergehenden Ansprüche, wobei die Verarbeitungsinformationen über die geschaltete Netzwerkverbindung (3) nicht in Echtzeit übertragen werden, wobei zumindest der Inhalt der Verarbeitungsinformationen vorzugsweise im UP³I-Standard festgelegt ist.

4. Verfahren nach einem der vorhergehenden Ansprüche, wobei zusätzlich zu den Verarbeitungsinformationen Steuerinformationen zum Steuern der Verarbeitungseinheiten (22 bis 26, 12 bis 20) des Druck- oder Kopiersystems zum Ausführen eines Druckauftrags übertragen werden und/oder dass zumindest ein Teil der Steuerinformationen von der jeweiligen Verarbeitungseinheit (22 bis 26, 12 bis 20) durch eine Verarbeitung der Verarbeitungsinformationen erzeugt wird.

5. Verfahren nach einem der vorhergehenden Ansprüche, wobei die ersten Daten mit Hilfe eines echtzeitfähigen Bussystems übertragen werden.

6. Verfahren nach einem der vorhergehenden Ansprüche, wobei die Papierlaufinformationen zum Steuern des Produktionsablaufs zum Verarbeiten des Trägermaterials mit Hilfe des Druck- oder Kopiersystems dienen.

7. Verfahren nach einem der vorhergehenden Ansprüche, wobei die Datenübertragungsstrecke zum Übertragen der ersten Daten zwischen mindestens drei Verarbeitungseinheiten (12 bis 20) der Druckstraße seriell erfolgt, vorzugsweise nach Art einer Daisy Chain zwischen der ersten Verarbeitungseinheit (12) und der zweiten Verarbeitungseinheit (14) und zwischen der zweiten Verarbeitungseinheit (14) und der dritten Verarbeitungseinheit (16).

8. Verfahren nach einem der vorhergehenden Ansprüche, wobei die Kommunikationseinheiten (22 bis 26) jeweils einen Leitstand (22 bis 26) aufweisen, wobei die Leitstände (22 bis 26) über die geschaltete Netzwerkverbindung (3) zur Übertragung der zweiten Daten miteinander verbunden sind, jeder Leitstand (22 bis 26) mit mindestens einer Steuereinheit der jeweiligen Verarbeitungseinheit (12 bis 20) der Druckstraße verbunden ist, und vorzugsweise mindestens eine Steuereinheit jeder der zwei Verarbeitungseinheiten (12 bis 20) oder die Leitstände (22 bis 26) über eine echtzeitfähige Datenverbindung (1) zur Übertragung der ersten Daten mit mindestens einer Steuereinheit der anderen Verarbeitungseinheit (12 bis 20) bzw. mit dem anderen Leitstand (22 bis 26) verbunden wird.

9. Verfahren nach einem der vorhergehenden Ansprüche, wobei die geschaltete Netzwerkverbindung (3) durch eine Switched-Ethernet-Netzwerkverbindung und/oder eine drahtlose Netzwerkverbindung über einen Accesspoint bereitgestellt wird.

10. Verfahren nach einem der vorhergehenden Ansprüche, wobei die Verarbeitungsinformationen insbesondere Managementdaten zur Verwaltung der Verarbeitungseinheiten untereinander, Steuerdaten mit Messwerten und Einstellwerten zum Bereitstellen mindestens einer Bedienoberfläche und/oder Programmdaten zum Bereitstellen von Steuerprogrammen und/oder Bedienoberflächen umfassen, die den zweiten Daten zugeordnet werden, und zusätzlich oder alternativ zumindest ein Teil der zweiten Daten mit Hilfe der echtzeitfähigen Übertragungsstrecke übertragen werden, vorzugsweise währenddessen die Verarbeitungseinheiten des Druck- oder Kopiersystems das Trägermaterial nicht aktiv verarbeiten.

11. Verfahren nach einem der vorhergehenden Ansprüche, wobei das Druck- oder Kopiersystem eine digitale Druckstrasse ist, wobei die Verarbeitungseinheiten zum Verarbeiten eines Trägermaterials mindestens einer Druckeinheit (25) mit mindestens einem Druckwerk und mindestens eine weitere Verarbeitungseinheit, vorzugsweise mindestens eine Vorverarbeitungseinheit zum Vorverarbeiten des zu bedruckenden Trägermaterials und/oder mindestens eine Nachverarbeitungseinheit zum Nachverarbeiten des bedruckten Trägermaterials und/oder eine weitere Druckeinheit mit mindestens einem Druckwerk und/oder eine Zwischenverarbeitungseinheit aufweist.

12. Anordnung zum Übertragen von Daten zwischen mindestens zwei Verarbeitungseinheiten (12, 14, 16, 18, 20) eines Druck- oder Kopiersystems,
bei der die Verarbeitungseinheiten (12 bis 20) einer Druckstraße über eine echtzeitfähige Datenübertragungsstrecke (1) verbunden sind,
wobei die echtzeitfähige Datenübertragungsstrecke (1) zum Übertragen von ersten Daten mit formularbezogenen Papierlaufinformationen dient, für die eine Echtzeitverarbeitung erforderlich ist, und
bei der die Verarbeitungseinheiten (22 bis 26) einer übergeordneten Kommunikationssteuerung über eine geschaltete Netzwerkverbindung (3) verbunden sind, die zumindest eine physikalische Schicht zum Übertragen von Daten bereitstellt, wobei die geschaltete Netzwerkverbindung (3) zum Übertragen von zweiten Daten mit Verarbeitungsinformationen dient, für die keine Echtzeitverarbeitung erforderlich ist.

## Claims

1. Method to transfer data between at least two processing units of a printing or copying system, **characterized in that**
the processing information to be transferred between the processing units (22 to 26, 12 to 20) are split up into first data and second data, wherein the first data comprise at least form-related paper travel information for which a real-time processing is required, and wherein the second data comprise processing information for which a real-time processing is not required;
the processing units (12, 14, 16, 18, 20) are the processing units of a printing line that are connected via a real-time-capable data transmission line (1), wherein the first data with form-related paper travel information are transferred with the aid of the real-time-capable data transmission line (1), and
the processing units (22, 24, 26) are communication units of a higher-level communication control that are connected via a switched network connection (3) via which at least one physical layer is provided for the transfer of data, wherein the second data are transferred with the aid of the switched network connection (3).

2. Method according to claim 1, wherein at least one network interface of each of the processing units (22 to 26) is respectively connected with a network switch (27) via which the data to be transferred are buffered and relayed to at least the respective other processing unit (22 to 26), wherein the network interface is preferably formed by a communication unit (22 to 26) connected with a control unit of the processing units (12 to 20) of the respective processing unit, in particular by a master control station (22 to 26) connected with a control unit of a processing unit (12 to 20) of the respective processing unit.

3. Method according to one of the preceding claims, wherein the processing information are not transferred in real time via the switched network connection (3), wherein at least the content of the processing information is preferably established in the UP³I standard.

4. Method according to one of the preceding claims, wherein in addition to the processing information control information for control of the processing units (22 to 26, 12 to 20) of the printing or copying system for executing a print job are transferred and/or wherein at least a part of the control information is generated by the respective processing unit (22 to 26, 12 to 20) via a processing of the processing information.

5. Method according to one of the preceding claims, wherein the first data are transferred with the aid of a real-time-capable bus system.

6. Method according to one of the preceding claims, wherein the paper travel information serve to control the production workflow for processing the substrate material with aid of the printing or copying system.

7. Method according to one of the preceding claims, wherein the data transmission line for the transfer of the first data between at least three processing units (12 to 20) of the printing line is carried out serially, preferably in the manner of a daisy chain between the first processing unit (12) and the second processing unit (14) and between the second processing unit (14) and the third processing unit (16).

8. Method according to one of the preceding claims, wherein the communication units (22 to 26) each have a master control station (22 to 26), wherein the master control stations (22 to 26) are connected with one another via the switched network connection (3) for transfer of the second data, wherein each master control station (22 to 26) is connected with at least one control unit of the respective processing unit (12 to 20) of the printing line, and wherein preferably at least one control unit of each of the two processing units (12 to 20) or the control stations (22 to 26) is connected via a real-time-capable data connection (1) for transfer of the first data with at least one control unit of the other processing unit (12 to 20) or respectively with the other control station (22 to 26).

9. Method according to one of the preceding claims, wherein the switched network connection (3) is provided by a switched Ethernet network connection and/or a wireless network connection via an access point.

10. Method according to one of the preceding claims, wherein the processing information, in particular management data to administer the processing units among one another, comprise control data with measurement values and setting values to provide at least one user interface and/or program data to provide control programs and/or user interfaces that are associated with the second data; and wherein additionally or alternatively at least a part of the second data are transferred with the aid of the real-time-capable transmission line, preferably while the processing units of the printing or copying system are not actively processing the substrate material.

11. Method according to one of the preceding claims, wherein the printing or copying system is a digital printing line, wherein the processing units for processing a substrate material have at least one printing unit (25) with at least one printing device and at least one further processing unit, preferably at least one pre-processing unit for pre-processing of the substrate material to be printed and/or at least one post-processing unit for post-processing of the printed substrate material and/or a further printing unit with at least one printing device and/or an intermediate processing unit.

12. Arrangement for transfer of data between at least two processing units (12, 14, 16, 18, 20) of a printing or copying system,
wherein the processing units (12 to 20) of a printing path are connected via a real-time-capable data transmission line (1),
wherein the real-time-capable data transmission line (1) serves for transfer of first data with form-related paper travel information for which a real-time processing is required, and
wherein the processing units (22 to 26) of a higher-level communication control are connected via a switched network connection (3) that provides at least one physical layer for transfer of data, wherein the switched network connection (3) serves for transfer of second data with processing information for which a real-time processing is not required.

## Revendications

1. Procédé de transmission de données entre au moins deux unités de traitement d'un système d'impression ou de copie, **caractérisé en ce que**
les informations de traitement à transmettre entre les unités de traitement (22 à 26, 12 à 20) sont réparties en premières données et en secondes données, les premières données contenant au moins des informations de déplacement du papier par rapport au formulaire, pour lesquelles un traitement en temps réel est nécessaire, et les secondes données contenant des informations de traitement pour lesquelles aucun traitement en temps réel n'est nécessaire,
les unités de traitement (12, 14, 16, 18, 20) sont les unités de traitement d'une chaîne d'impression, reliées par un parcours de transmission de données (1) fonctionnant en temps réel, les premières données contenant les informations de circulation du papier par rapport au formulaire étant transmises à l'aide du parcours de transmission de données (1) fonctionnant en temps réel, et
les unités de traitement (22, 24, 26) sont des unités de communication d'un système de commande de communication prioritaire, reliées entre elles par une liaison de réseau commutée (3) créant au moins une couche physique pour la transmission des données, les secondes données étant transmises à l'aide de la liaison de réseau commutée (3).

2. Procédé selon la revendication 1, au moins une interface de réseau de chaque unité de traitement (22 à 26) étant reliée respectivement à un commutateur de réseau (27) par l'intermédiaire duquel les données à transmettre sont temporairement stockées et transmises au moins à n'importe quelle autre unité de traitement (22 à 26), l'interface de réseau étant formée de préférence par une unité de communication (22 à 26) reliée à une unité de commande des unités de traitement (12 à 20) de l'unité de traitement respective, en particulier par un poste de contrôle (22 à 26) relié à une unité de commande d'une unité de traitement (12 à 20) de chaque unité de traitement.

3. Procédé selon l'une quelconque des revendications précédentes, les informations de traitement étant transmises par la liaison de réseau commutée (3) mais pas en temps réel, au moins le contenu des informations de traitement étant établi de préférence selon la norme UP³I.

4. Procédé selon l'une quelconque des revendications précédentes, dans lequel, en plus des informations de traitement, des informations de commande destinées à commander les unités de traitement (22 à 26, 12 à 20) du système d'impression ou de copie, sont transmises pour mettre en oeuvre un ordre d'impression et/ou au moins une partie des informations de commande est produite par l'unité de traitement respective (22 à 26, 12 à 20) par le biais d'un traitement des informations de traitement.

5. Procédé selon l'une quelconque des revendications précédentes, les premières données étant transmises à l'aide d'un système de bus fonctionnant en temps réel.

6. Procédé selon l'une quelconque des revendications précédentes, les informations de circulation du papier servant à commander le processus de production pour traiter le matériau de support à l'aide du système d'impression ou de copie.

7. Procédé selon l'une quelconque des revendications précédentes, le parcours de transmission de données destiné à transmettre les premières données entre au moins trois unités de traitement (12 à 20) de la chaîne d'impression s'effectuant en série, de préférence à la façon d'une DAISY CHAIN entre la première unité de traitement (12) et la deuxième unité de traitement (14) et entre la deuxième unité de traitement (14) et la troisième unité de traitement (16).

8. Procédé selon l'une quelconque des revendications précédentes, les unités de communication (22 à 26) comprenant respectivement un poste de contrôle (22 à 26), les postes de contrôle (22 à 26) étant reliés ensemble par la liaison de réseau commutée (3) pour transmettre les secondes données, chaque poste de contrôle (22 à 26) étant relié à au moins une unité de commande de chaque unité de traitement (12 à 20) de la chaîne d'impression, et de préférence au moins une unité de commande de chacune des deux unités de traitement (12 à 20) ou chacun des postes de contrôle (22 à 26) étant reliée par une liaison de données (1) fonctionnant en temps réel pour transmettre les premières données à au moins une unité de commande de l'autre unité de traitement (12 à 20) ou à l'autre poste de contrôle (22 à 26).

9. Procédé selon l'une quelconque des revendications précédentes, la liaison de réseau commutée (3) étant fournie par une liaison de réseau Ethernet commutée et/ou une liaison de réseau sans fil par le biais d'un point d'accès.

10. Procédé selon l'une quelconque des revendications précédentes, dans lequel les informations de traitement contiennent en particulier des données de gestion destinées à gérer les unités de traitement entre elles, des données de commande comprenant des valeurs de mesure et des valeurs de réglage destinées à fournir au moins une interface utilisateur, et/ou des données de programme destinées à fournir des programmes de commande et/ou des interfaces utilisateur associées aux secondes données, et en complément ou en remplacement, au moins une partie des secondes données est transmise à l'aide du parcours de transmission fonctionnant en temps réel, de préférence, pendant ce temps, les unités de traitement du système d'impression ou de copie ne traitent pas activement le matériau de support.

11. Procédé selon l'une quelconque des revendications précédentes, dans lequel le système d'impression ou de copie est une chaîne d'impression numérique, les unités de traitement destinées à traiter un matériau de support au moins d'une unité d'impression (25) au moyen d'au moins un groupe d'impression et comprenant au moins une autre unité de traitement, de préférence au moins une unité de prétraitement destinée à prétraiter le matériau de support à imprimer et/ou au moins une unité de posttraitement du matériau de support imprimé et/ou une autre unité d'impression comprenant au moins un groupe d'impression et/ou une unité de traitement intermédiaire.

12. Ensemble de transmission de données entre au moins deux unités de traitement (12, 14, 16, 18, 20) d'un système d'impression ou de copie,
avec lequel les unités de traitement (12 à 20) d'une chaîne d'impression sont reliées par un parcours de transmission de données (1) fonctionnant en temps réel,
le parcours de transmission de données (1) fonctionnant en temps réel servant à transmettre des premières données comprenant des informations de circulation d'un papier par rapport à un formulaire, pour lesquelles un traitement en temps réel est nécessaire, et
avec lequel les unités de traitement (22 à 26) d'un système de commande de communication prioritaire sont reliées par une liaison de réseau commutée (3) créant au moins une couche physique destinée à transmettre des données, la liaison de réseau commutée (3) servant à transmettre des secondes données comprenant des informations de traitement pour lesquelles aucun traitement en temps réel n'est nécessaire.
